## Europäisches Patentamt

## European Patent Office

## Office européen des brevets

(19)

(11) Veröffentlichungsnummer: **0 014 777**
**B1**

(12) **EUROPÄISCHE PATENTSCHRIFT**

(45) Veröffentlichungstag der Patentschrift:
27.10.82

(51) Int. Cl.³: **B 60 H 1/00**

(21) Anmeldenummer: **79200092.9**

(22) Anmeldetag: **23.02.79**

(54) **Verbesserte Klimaanlage für Autobusse.**

(30) Priorität: **25.01.79 BE 57569**

(43) Veröffentlichungstag der Anmeldung:
**03.09.80 Patentblatt 80/18**

(45) Bekanntmachung des Hinweises auf die Patenterteilung:
**27.10.82 Patentblatt 82/43**

(84) Benannte Vertragsstaaten:
**DE FR GB IT NL SE**

(56) Entgegenhaltungen:
**DE-A-1 580 013**
**DE-A-2 134 045**
**DE-A-2 658 882**
**FR-A-950 925**
**FR-A-2 374 596**
**US-A-2 250 619**
**US-A-2 696 155**
**US-A-2 698 569**

(73) Patentinhaber: **Van Hool, naamloze vennootschap,
Bernard Van Hoolstraat 58, B-2578 Lier (BE)**

(72) Erfinder: **Blereau, Rudiger Johan Godelieve,
Zandstraat 40, B-2850 Keerbergen (BE)**
Erfinder: **Verheyden, Frans Elisabeth Gustaaf, Grote
Nieuwedijkstraat 339, B-2800 Mechelen (BE)**

(74) Vertreter: **Bockstael, Marius Florimond Jean et al,
Arenbergstraat 13, B-2000 Anvers (BE)**

BUNDESDRUCKEREI BERLIN

Verbesserte Klimaanlage für Autobusse

Die Erfindung bezieht sich auf eine Klimaanlage in Autobussen mit folgenden Bestandteilen: Zwei sich beiderseits des Fahrzeugs unter dem Dach über die Gesamtlänge des Autobusses erstreckende ununterbrochene Hauptluftkanäle; eine in jedem der beiden Luftkanäle nahezu in der Mitte vorgesehene Lufteinlaßöffnung, die in in einen mit dem betreffenden Luftkanal in Verbindung stehenden Lufteinlaßraum mündet; ein an beiden Seiten eines jeden der Lufteinlaßräume angeordneter Radiator od. dgl., der mit einem Luftansaugventilator versehen ist; Mittel, um die vorgenannten Hauptluftkanäle in Kopfhöhe der Reisenden mittels regelbarer Luftaustrittsöffnungen mit dem Innenraum des Autobusses zu verbinden; und Mittel, um die Hauptluftkanäle über die Gesamtlänge der Scheiben durch enge, über den Scheiben vorgesehene Spaltöffnungen mit dem Innenraum zu verbinden.

Eine ähnliche Anlage ist durch DE-A-1 580 013 bekannt. Bei dieser bekannten Anlage wird ein Beschlagen der Seitenscheiben einigermaßen verhindert durch die aus der Spalte herausströmende Luft, jedoch sind diese Spalte in einiger Entfernung von den Scheiben angebracht, so daß der Luftstrom bei großer Strömungsmenge die Reisenden stören kann.

Deshalb strebt die Erfindung an, eine Anlage des vorbeschriebenen Typs zu schaffen, welche diesen Nachteil nicht aufweist und außerdem die Rückscheiben dunstfrei zu halten und den Innenraum des Autobusses zu entlüften vermag.

Erfindungsgemäß wird dieses Ziel durch die im Kennzeichenteil des Anspruchs 1 aufgeführten Maßnahmen erreicht.

Es sei bemerkt, daß die US-A-2 698 569 schon eine Anlage zeigt, wobei bei beiden Enden eines jeden der beiden Luftkanäle eine Luftaustrittsöffnung zum Entlüften des Businnenraumes vorgesehen ist.

Aus der US-A-2 696 155 ist an sich bekannt, die beiden in Längsrichtung verlaufenden Luftkanäle durch einen quergerichteten Luftkanal zu verbinden. Dabei sind ebenfalls über den Fenstern Luftzuführöffnungen vorgesehen, und zur Heizung ist im unteren Bereich des Fahrzeugs eine Umluftheizung mit in der Mitte des Fahrzeugs gelegenen Ansaugöffnungen vorgesehen. Schließlich ist es aus der FR-A-2 374 596 bekannt, zwei sich in Längsrichtung eines Busses erstreckende auch am Wagenende miteinander zu verbinden.

Die Merkmale und Vorteile der Erfindung treten deutlicher aus der nachstehenden eingehenden Beschreibung einer bevorzugten Ausführungsweise zutage. Diese ohne irgendeine einschränkende Absicht gegebene Beschreibung findet an Hand der Zeichnungen statt. Es zeigt

die Abbildung 1 schematisch eine perspektivische Ansicht eines mit einer erfindungsgemäßen Klimaanlage ausgestatteten Autobusses,

die Abbildung 2 schematisch eine Draufsicht des Fahrzeugs gemäß der Abbildung 1, die Abbildung 3 eine der Abbildung 2 entsprechende, das Luftströmungssystem im Autobus schematisch erläuternde Ansicht,

die Abbildungen 4 und 5 zwei gemäß den Linien IV-IV und V-V der Abbildung 2 gemachte Schnitte des betreffenden Fahrzeugs,

die Abbildung 6 den Teil F6 der Abbildung 5 in vergrößertem Maßstab und

die Abbildungen 8, 9, 10, 11 und 12 fünf gemäß den Linien VIII-VIII, IX-IX, X-X, XI-XI und XII-XII der Abbildung 2 gemachte Schnitte des betreffenden Fahrzeugs.

Wie aus den Zeichnungen ersichtlich ist, besteht die erfindungsgemäße Anlage im wesentlichen aus zwei beiderseits des Autobusses am Dach angeordneten und an der Hinterseite des Autobusses mittels eines Querkanals 3 miteinander verbundenen Hauptluftkanälen 1 und 2.

In jedem der beiden Hauptluftkanäle 1 und 2 sind drei Öffnungen vorgesehen: Eine erste Lufteinlaßöffnung 4 für den Eintritt frischer Außenluft P1 nahezu in der Längenmitte des Autobusses; eine zweite, an der Vorderseite angeordnete Luftauslaßöffnung 5 für den Austritt verunreinigter Luft P2; und eine dritte, an der Hinterseite angeordnete Luftauslaßöffnung 6, ebenfalls für den Austritt verunreinigter Luft P3. Die Lufteinlaßöffnungen 4 münden in einen Heizkörper oder Dachradiatoren (16, 17) enthaltenden Lufteinlaßraum 4A aus, während jede der beiden Luftauslaßöffnungen 5 und 6 in einen sogenannten Entlüftungskasten 7 bzw. 8 ausmündet, der im entsprechenden Hauptluftkanal 1 bzw. 2 angeordnet ist und unmittelbar mit der Innenatmosphäre des Autobusses in Verbindung steht.

Die vorgenannten Entlüftungskästen 7 stehen durch eine dazu in ihrer Wand vorgesehene Öffnung 9 mit dem Innenraum des Autobusses in Verbindung, wobei diese Öffnung normalerweise mit einer Klappe 10 verschlossen ist, die beispielsweise aus einem einfachen, schräg angeordneten Gummielement besteht, derart, daß sie die Öffnung fortwährend schließt, außer wenn die Öffnung durch Innendruck geöffnet wird. Aufgabe dieser Klappe ist, unangenehmen Luftzug im Autobusraum während der Stillstände des Fahrzeugs zu vermeiden.

Die Öffnung 11 des Entlüftungskastens 8 kann ebenfalls mit einer geeigneten Klappe, beispielsweise derselben Art wie die des Kastens 7, geschlossen werden. Beim Beispiel gemäß der Abbildung 11 ist aber in der Öffnung 11 ein Absaugventilator 12 angeordnet. Es hat sich jedoch in der Praxis gezeigt, daß, dank der Druckerzeugung durch die mit den Heizkörpern zusammenwirkenden Dachventilatoren, der statische Innendruck im Fahrzeug hoch genug ist, um den Ventilator 12 normalerweise unnötig zu machen.

Jeder der beiden Hauptluftkanäle 1 und 2 ist mit über dem Haupt der Reisenden angeordneten Luftaustrittsöffnungen 13 versehen und enthält Leitungen 14 und 15 für die Heizung der in jedem Hauptkanal 1 und 2 beiderseits der vorgenannten Lufteinlaßöffnungen 4 angeordneten Heizkörper oder Dachradiatoren 16 und 17. An Ort und Stelle dieser Heizkörper 16 — 17 sowie der Lufteinlaßöffnungen 4 läuft jeder Hauptkanal 1 — 2 unter diesen Heizkörpern und dem Lufteinlaßraum 4a einfach durch, zwecks Verbindung des vorderen Hauptkanalteils mit dem hinteren Hauptkanalteil mittels einer waagerechten, zur Höhe der Lufteinlaßöffnungen 4 und der Heizkörper 16 und 17 angeordneten Scheidewand 18.

Für die Verbindung zwischen der Hauptkanalkonstruktion 1 bzw. 2 und dem benachbarten Längsdachrandprofil 19 dient ein über seine Gesamtlänge mit Durchlaßöffnungen 21 versehenes Spezialprofil 20, worunter ein geeignetes Profil 22 befestigt ist, derart, daß unter diesen Durchlaßöffnungen 21 ein Kanal 23 gebildet wird, das mit einem waagerechten Kanal 24 in Verbindung steht, wobei das freie Ende des waagerechten unteren Teils des vorgenannten Profils 22 in geringem Abstand (a) von den Seitenfenstern 25 endet, derart, daß der vorgenannte waagerechte Kanal 24 in einer Längsspalte 26 bestimmter Breite endet, dies alles derart, daß die Luft aus den Hauptkanälen 1 und 2 gemäß den Pfeilen P4 über die Scheiben 25 zwecks Vermeidung von Scheibenbeschlag nach unten fließt.

Dank der Gegenwart der vorgenannten sehr engen, beispielsweise nur 1 — 2 mm breiten Längsspalte 26, fließt ein sehr gleichmäßiger Luftstrom über die Scheiben. Dieses System wird zweckmäßigerweise über die Gesamtlänge des Fahrzeugs angewendet.

Da das aus den Profilen 20 und 22 bestehende System nicht nur an den Seiten des Autobusses, sondern ebenfalls über der Hinterscheibe desselben vorgesehen ist, wird auch diese Scheibe zweckmäßigerweise beschlagfrei gehalten. Außerdem bildet dieser Luftstrom eine sogenannte Luftgardine zwischen dem Reisenden und der kalten Seitenscheibe. Dank dem dadurch erzielten Wärmeschutz ist Doppelverglasung unnötig.

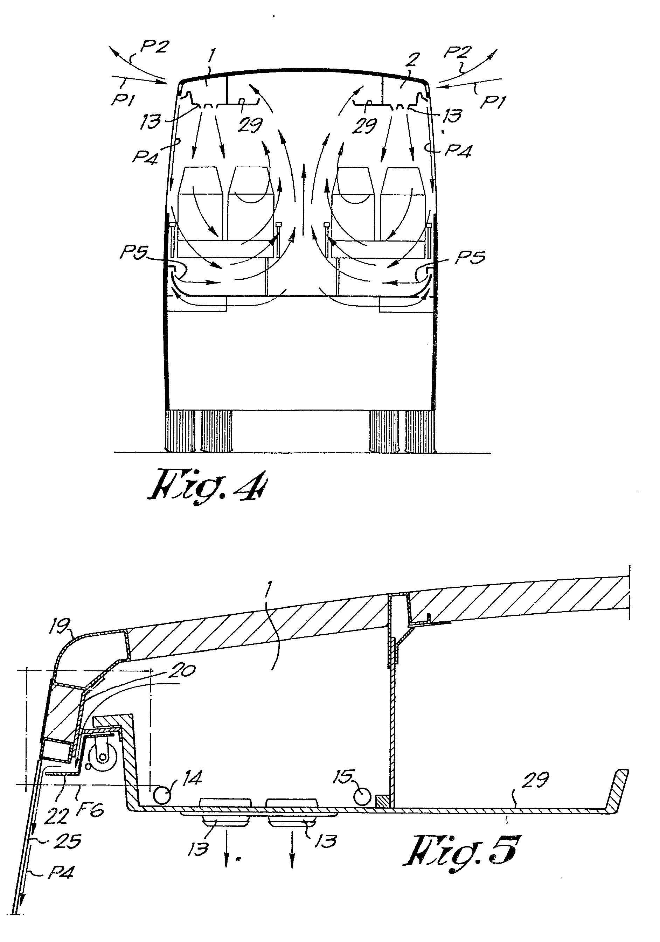

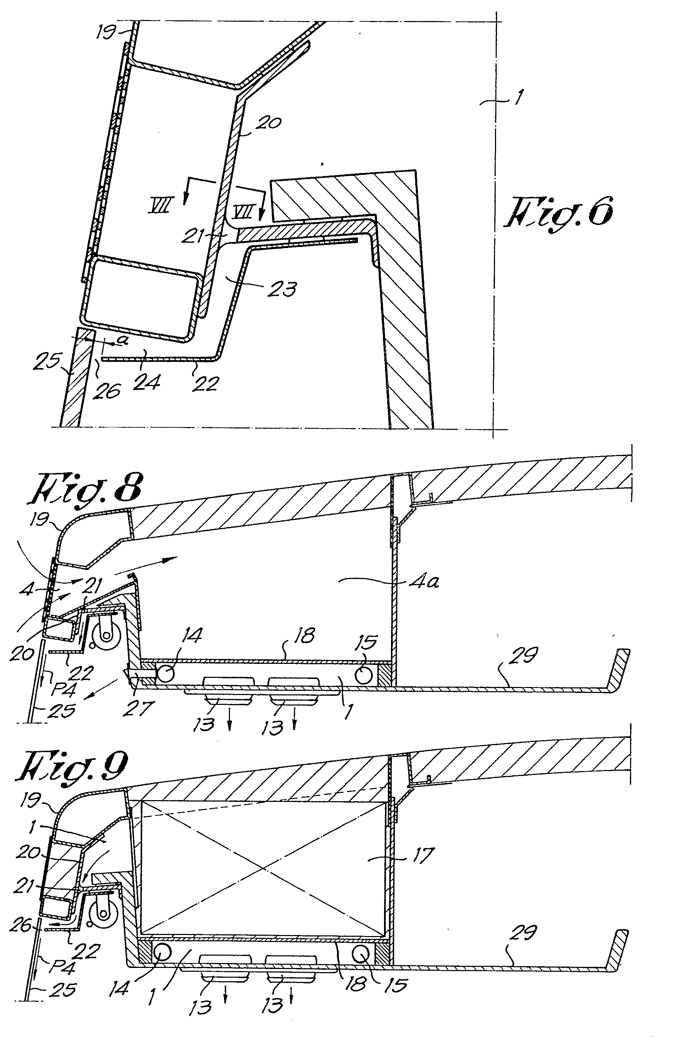

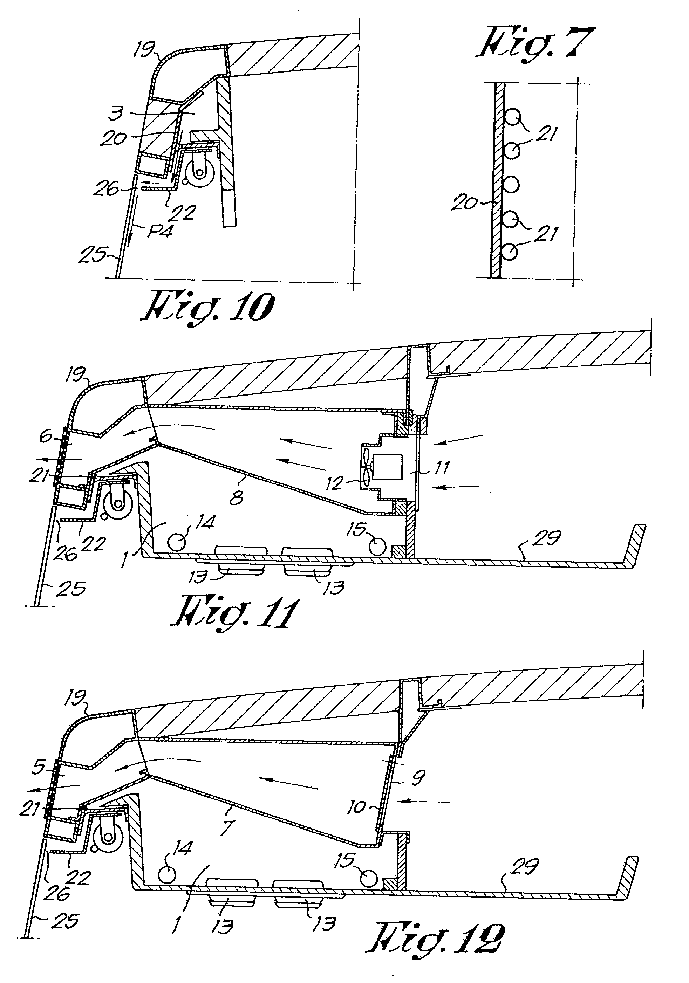

Wie es die Abbildung 4 schematischerweise erläutert, wird die durch die Hauptkanäle 1 und 2 stattfindende Heizung mit einer Kanalheizung kombiniert, derart, daß Warmluft P5 unter den Sitzen in das Fahrzeug hereintritt.

Zur Stelle der Lufteinlaßöffnung 4, und zwar unter dem Lufteinlaßraum 4a, findet an den Seiten eines jeden Hauptkanals 1 — 2 zusätzliche Lüftung durch mehrere, mit jedem Hauptkanal 1 — 2 in Verbindung stehende Längsspalte 26 statt, wobei jedesmal ein zusätzlicher Luftstrom P4 auf die naheliegende Scheibe 25 gerichtet wird.

Da die Luftzufuhr ab der Mitte des Fahrzeugs stattfindet, werden auch die Hauptkanäle an der Vorderseite und der Hinterseite des Fahrzeugs unter Druck gebracht, demzufolge die Luft zum Ausströmen durch die vorgenannten Luftaustrittsöffnungen 13 und Längsspalten 26 gezwungen wird.

Weiter ist die Lüftungsanlage derart gedacht, daß, dank der Tatsache, daß die Spalten 26 nicht geschlossen werden können, stets eine gute Lüftung stattfindet, sogar wenn die Reisenden sämtliche Luftaustrittsöffnungen zudrehen.

Schließlich läßt die oben beschriebene Klimaanlage sich gegebenenfalls auch mit einer sogenannten Luftaufbereitungsanlage ergänzen, deren Verdampfer 28 auf dem Dach des Autobusses vor oder hinter den vorgenannten Dachheizkörpern 16 — 17, aber nicht zwischen ihnen, angeordnet wird. Der nicht gezeichnete Ausblaseventilator dieses Verdampfers wird in diesem Fall unmittelbar an die Hauptkanäle 1 und 2 angeschlossen, so daß für die Luftaufbereitung dieselben Luftaustrittsöffnungen 13 und Luftspalten 26 wie im oben beschriebenen Fall benutzt werden können.

Die zugeführte Frischluft und geheizte Dachluft bestehen fast ausschließlich aus frischer Außenluft, während die Luftaufbereitung hauptsächlich mit Umluft stattfindet zwecks Verbesserung des thermischen Wirkungsgrades des Kühlvorgangs.

Um bei der Anwendung einer Luftaufbereitungsanlage das Entweichen bereits gekühlter Luft durch die vier Entlüftungsspalten 5 und 6 einerseits und die zwei Zufuhrspalten 4 anderseits zu vermeiden, sind diese Spalten mit einer geeigneten Verschlußvorrichtung versehen, wobei die Abstandsbetätigung der sechs erforderlichen Verschlußvorrichtungen entweder mit der Hand oder pneumatisch bzw. elektrisch bei Benutzung der Luftaufbereitungsanlage stattfindet. Es handelt sich dabei um Schieber, Klappen od. dgl.

Dank der Tatsache, daß die Dachkanäle ebenfalls als Verteilungskanäle für die Luftaufbereitung dienen können, ergibt sich der zusätzliche Vorteil beim Verkauf des Fahrzeugs als Gebrauchtwagen, daß die auf dem Dach angeordnete Luftaufbereitungsanlage abgenommen und wiederverwendet werden kann.

Die Gesamtanlage eignet sich also sowohl für Heizungs- als für Lüftungszwecke. Das Luftdurchströmungssystem ist in beiden Fällen dasselbe. Die Frischluft für die Innenheizung wird an der linken und der rechten Seite durch die Spalten 4 angesaugt und darauf, gegebenenfalls nach Erwärmung, rechts und links in die Kanäle 1 und 2 hineingeleitet im Hinblick einerseits auf ihre Verteilung über die Reisenden und anderseits auf die Bildung der vorgenannten Luftgardinen über den Scheiben 25.

Dank der Tatsache, daß die vorgenannten Luftkanäle sich nach hinten bis zur Hinterscheibe des Fahrzeugs erstrecken, kann auch diese mit einer Luftgardine überdeckt werden, so daß Wasserdampfbeschlagung der Seitenscheiben und der Hinterscheibe des betreffenden Autobusses in allen Umständen nahezu völlig vermieden werden kann. Zugleich wird beiderseits auf Bodenhöhe Luft angesaugt, die nach Erwärmung durch unter dem Boden angeordnete Heizkörper gleichmäßig über den Fahrzeuginnenraum gemäß den vorgenannten Pfeilen P5 verteilt wird, wobei die Abluft vorn und hinten an der Oberseite der Seitenwände durch die vorgenannten Spalten 5 und 6 abgesaugt wird. Das Ansaugen der Innenluft für die unter dem Boden angeordneten Heizkörper findet unter den Sitzen statt.

Die gesamte Klimatisierung gemäß den erfindungsgemäßen Verbesserungen findet mit Frischluft, also nicht mit Abluft oder Umluft, statt. Die mit Tabakrauch verunreinigte Innenluft wird ja fortwährend und schnell durch die weiten Öffnungen 5 und 6 an der Vorderseite und der Hinterseite des Fahrzeugs abgeführt. Die Heizung des Personenabteils findet sowohl von unten als von oben statt und kann beliebig auf Luftkühlung umgeschaltet werden. Überdies kann die Heizung oder Kühlung durch jeden Reisenden mit den Öffnungen 13 beliebigerweise geregelt werden.

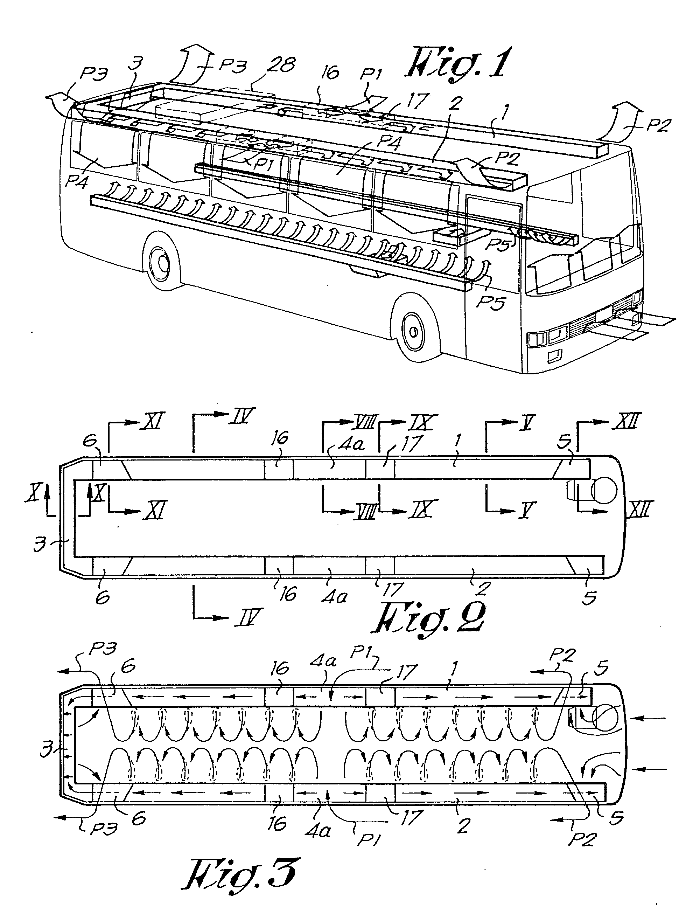

Mit den beiden Luftströmungen einerseits gemäß der Abbildung 4 und anderseits gemäß der Abbildung 3 ergeben sich ab der Mitte in beiden Richtungen vier schraubenlinienförmige Luftströmungen, wie es die Abbildung 3 schematischerweise in gestrichelter Linie erläutert.

Dank der Luftzufuhr in der Mitte durch die Spalten 4 fließt die Luft einerseits teilweise nach vorn infolge der natürlichen Entlüftung durch die Spalten 5 unter dem Einfluß des während der Fahrt in denselben erzeugten Unterdrucks und anderseits nach hinten infolge der Entlüftung durch die Spalten 6 mit oder ohne den vorgenannten Hilfsventilator 12. Dies ermöglicht, die Raucher an Stellen zu setzen, wo der Rauch die übrigen Reisenden nicht stören kann. Man kann sie ja vorn bzw. hinten im Wagen setzen, derart, daß die im Hinterteil der vorderen Bushälfte oder im Vorderteil der hinteren Bushälfte sitzenden Mitreisenden kein Ungemach erleiden, oder man kann für sie die den Vorderteil oder den Hinterteil des Busses reservieren usw.

Die Frischluft wird gemäß den vorliegenden Verbesserungen der Atmosphäre über dem Dach des Fahrzeugs entnommen, wo die Luft weniger Feuchte und weniger Kohlenmonoxyd enthält. Sie wird geheizt und fließt, gemäß der vorhergehenden Beschreibung, durch die Spalten 26 über die Seitenscheiben und die Hinterscheibe, wo sie die Feuchte schnell aufnimmt und auf diese Weise das Beschlagen der Scheiben verhindert. Diese Feuchte rührt bekanntlich von der Atemluft und der Transpiration und gegebenenfalls von der feuchten Oberkleidung der Reisenden her. Sie wird also unmittelbar aus der Innenluft aufgenommen, bevor sie in der Lage ist, auf kalten Gegenständen zu kondensieren.

Das System gemäß der vorliegenden Erfindung ermöglicht eine höchstmögliche Frischluftzufuhr, sogar im Winter, wenn das Fahrzeug geheizt wird.

Da die Entlüftungsöffnungen sich im Gepäckrecken 28 befinden, werden die Reisenden keinesfalls durch Kaltluftzug behindert. Überdies ist dank der vierfachen Absaugung die Luftgeschwindigkeit im Wagen sehr klein, so daß der Reisende vom Entlüftungsvorgang kaum etwas merkt.

Es geht aus der vorhergehenden Beschreibung hervor, daß die erfindungsgemäße Klimaanlage sich ausgezeichnet für eine sehr zweckmäßige Lüftung, Heizung und Entlüftung und sich gegebenenfalls für die Luftaufbereitung in Autobussen eignet.

## Patentansprüche

1. Klimaanlage in Autobussen mit folgenden Bestandteilen: zwei sich beiderseits des Fahrzeugs unter dem Dach über die Gesamtlänge des Autobusses erstreckende, ununterbrochene Hauptluftkanäle (1, 2); eine in jedem der beiden Luftkanäle nahezu in der Mitte vorgesehene Lufteinlaßöffnung (4), die in einen mit dem betreffenden Luftkanal in Verbindung stehenden Lufteinlaßraum (4a) mündet; ein an beiden Seiten eines jeden der Lufteinlaßräume (4a) angeordneter Radiator (16, 17) od. dgl., der mit einem Luftansaugventilator versehen ist; Mittel, um die vorgenannten Hauptluftkanäle in Kopfhöhe der Reisenden mittels regelbarer Luftaustrittsöffnungen (13) mit dem Innenraum des Autobusses zu verbinden; und Mittel, um die Hauptluftkanäle (1, 2) über die Gesamtlänge der Scheiben (25) durch enge, über den Scheiben vorgesehene Spaltöffnungen mit dem Innenraum zu verbinden, dadurch gekennzeichnet, daß die beiden Hauptluftkanäle (1, 2) über der Rückscheibe des Busses (bei 3) miteinander verbunden sind und bei dem vorderen und hinteren Ende der Hauptluftkanäle jeweils eine Luftauslaßöffnung (5, 6) vorgesehen ist, um den Businnenraum zu entlüften, und daß die über den Scheiben (25) vorgesehenen Spaltöffnungen durch einen ununterbrochenen Längsspalt (26) eines weiteren Kanals (24) gebildet sind, der über den Fenstern durchgehend längs der beiden Seitenwände und der Rückwand des Busses verläuft und mittels Durchlaßöffnungen (21) mit den Hauptluftkanälen (1, 2) in Verbindung steht und die Spaltbreite (a) sowie der Abstand des Längsspaltes (26) zu den Fensterscheiben (25) so gewählt sind, daß die ausströmende Luft unter Bildung eines Luftvorhangs gleichmäßig und langsam über die Scheiben nach unten fließt.

2. Anlage gemäß Anspruch 1, dadurch gekennzeichnet, daß dieser mit dem Längsspalt (26) versehene Kanal (24) durch die Scheiben (25), ein Längsdachrandprofil (19), ein am Längsdachrandprofil (19) befestigtes zweites Profil (20) und ein an diesem zweiten Profil (20) befestigtes drittes Profil (22) abgegrenzt wird, wobei der Längsspalt (26) zwischen diesen Scheiben und einem Außenrand eines waagerechten Teils dieses dritten Profils (22) abgegrenzt wird.

3. Anlage gemäß Anspruch 1 oder 2, dadurch gekennzeichnet, daß der Längsspalt (26) 1 – 2 mm breit ist.

4. Anlage gemäß irgendeinem der Ansprüche 1 bis 3, dadurch gekennzeichnet, daß die vorgenannten Durchlaßöffnungen kleine, gleichmäßig über die Länge eines waagerechten Flansches des ersten Profils (20) verteilte Löcher (21) sind.

5. Anlage gemäß irgendeinem der Ansprüche 1 bis 4, dadurch gekennzeichnet, daß eine Luftaufbereitungsanlage vorgesehen ist, deren Luftausblaseventilatoren unmittelbar mit den Hauptluftkanälen (1, 2) verbunden sind, wobei die vorgenannten Lufteinlaßöffnungen (4) und Luftauslaßöffnungen (5, 6) mit einem Verschlußmittel versehen sind.

6. Anlage gemäß irgendeinem der Ansprüche 1 bis 5, dadurch gekennzeichnet, daß die Hauptluftkanäle (1, 2) ungefähr in der Mitte der Autobuslänge doppelt ausgeführt sind, und zwar aus einem Oberteil und einem Unterteil bestehen, wobei dieser Oberteil aus einem mit der Lufteinlaßöffnung (4) für frische Außenluft in Verbindung stehenden und an beiden Enden durch die vorgenannten Radiatoren (16, 17) begrenzten Lufteinlaßraum (4a) besteht und dieser Unterteil dauernd in Verbindung steht einerseits mit dem Vorderende und anderseits mit dem Hinterende des betreffenden Hauptluftkanals (1, 2).

7. Anlage gemäß irgendeinem der Ansprüche 1 bis 6, dadurch gekennzeichnet, daß die an jedem Ende der beiden Hauptluftkanäle (1, 2) vorgesehenen Auslaßöffnungen (5, 6) mit einem im betreffenden Hauptluftkanal (1, 2) angeordneten, sogenannten Entlüftungskasten (7, 8) in Verbindung stehen, der die Innenatmosphäre des Autobusses mit der Außenatmosphäre in Verbindung stellt.

8. Anlage gemäß Anspruch 7, dadurch gekennzeichnet, daß die Öffnung (9) zwischen der Innenatmosphäre des Autobusses und eines jedem Entlüftungskastens (7, 8) mit einer Klappe (10) verschlossen ist.

9. Anlage gemäß Anspruch 8, dadurch gekennzeichnet, daß die vorgenannte Klappe (10) aus einem schräg angeordneten, aus Gummi oder einem anderen geeigneten elastischen Leichtmaterial hergestellten Streifen besteht.

10. Anlage gemäß irgendeinem der Ansprüche 7 bis 9, dadurch gekennzeichnet, daß jeder hinterer der Entlüftungskästen (8) mit einem Luftabsaugventilator (12) ausgestattet ist.

11. Anlage gemäß irgendeinem der Ansprüche 6 bis 10, dadurch gekennzeichnet, daß beim vorgenannten, für das Ansaugen von Außenluft dienenden Zentralraum (4a) in der auswärts gerichteten Seitenwand des Hauptluftkanals (1, 2) Durchgänge vorgesehen sind, die den betreffenden Hauptluftkanal (1, 2) mit der Innenatmosphäre des Autobusses verbinden und derart gerichtet sind, daß die ausströmende Luft auf die naheliegenden Seitenscheiben (25) gerichtet ist.

## Claims

1. Air-conditioning plant for motorbuses having the following components: two interrupted main air ducts (1, 2) extending at both sides under the roof over the entire length of the bus; an air inlet opening (4) provided near the middle in each of the main air ducts, debouching into an air inlet space (4a) connected to the related air duct; a radiator (16, 17) or the like installed at either side of each of the air inlet spaces (4a) and equipped with an air suction fan; means to connect said main air ducts to the inner space of the motorbus through adjustable air inlet openings (13) at the height of the travellers' heads; and means to connect the main air ducts (1, 2) to the inner space through narrow slots extending over the entire length and at the top of the window panes (25), characterized in that both of the main air ducts (1, 2) are interconnected (at 3) over the rear side of the bus and that at the front and rear ends of each of the main air ducts an air outlet opening (5, 6) is provided to deaerate the inner space of the bus and that the air slots provided over the window panes (25) are formed by an interrupted longitudinal slot (26) or another duct (24) extending continually above the windows along both side walls and the rear wall of the bus and connected to the main air ducts (1, 2) by means of passages (21); the slot with (a) as well as the distance from the longidudinal slot (26) to the window panes (25) having been determined so that the outflowing air lowers slowly and evenly down the panes, creating an air curtain.

2. Plant according to claim 1, characterized in that this duct (24) provided with the longitudinal slot (26) is limited by the window panes (25), by a longitudinal roof section (19), by a second section (20) attached to said longitudinal roof section (19) and by a third section (22) attached to this second section (20), the longitudinal slot (26) being limited between these panes (25) and an outer edge of a vertical part of this third section (22).

3. Plant according to claim 1 or 2, characterized in that the longitudinal slot (26) is 1 to 2 mm wide.

4. Plant according to any one of the claims 1 through 3, characterized in that the said passages are small holes (21) equally spaced over the length of a horizontal of said first section (20).

5. Plant according to any one of claims 1, through 4, characterized in that an air-conditioning unit is provided, whose blowers are connected to the main air ducts (1, 2), each of the said air inlet openings (4) and air outlet openings (5, 6) being equipped with a closing device.

6. Plant according to any one of claim 1 through 5, characterized in that the main air ducts (1, 2) are made double near the middle of the motorbus length and comprise an upper and a lower part, this upper part consisting of an air inlet space (4a), connected to the air inlet opening (4) for fresh ambient air and limited at both ends by said radiators (16, 17) and this lower part being continually connected on one side to the front end and on the other side to the rear end of the corresponding main air duct (1, 2).

7. Plant according to any one of claims 1 through 6, characterized in that the outlet openings (5, 6) provided at either end of the two main air ducts (1, 2) are connected to a so-called deaerating box (7, 8) installed in the corresponding main air duct (1, 2), this box providing a connection between the inner bus atmosphere and the outside atmosphere.

8. Plant according to claim 7, characterized in that opening (9) between the inner bus atmosphere and each of the deaerating boxes (7, 8) is shut off by a flap (10).

9. Plant according to claim 8, characterized in that said flap (10) sonsists of a sloping strip of rubber or any other suitable flexible, light material.

10. Plant according to any one of claims 7 through 9, characterized in that each of the rear deaerating boxes (8) is equipped with an air exhaust fan (12).

11. Plant according to any one of claims 6 through 10, characterized in that near the said central space (4a) used for sucking in ambient air, passages are provided in the outward-directed lateral wall of the main air ducts (1, 2) to connect the corresponding main air duct (1, 2) to the inner bus atmosphere these passages being orientated so that the outflowing air is directed towards the neightbouring lateral panes (25).

**Revendications**

1. Dispositif de climatisation dans les autobus comprenant les composants suivants: deux gaines à air principales (1, 2) s'étendant des deux côtés sous le toit de l'autobus et sur toute la longueur; une bouche d'entrée d'air (4) située à peu près au milieu des deux gaines à air, débouchant dans une boîte d'admission d'air (4a) qui communique avec la gaine à air correspondante; un radiateur (16, 17) ou similaire équipé d'un ventilateur d'aspiration d'air, placé de chaque côté de chacune des boîtes d'admission d'air (4a); des moyens pour faire communiquer lesdites gaines principales à air avec l'espace intérieur de l'autobus à la hauteur de tête des voyageurs à l'aide d'ouvertures régables (13) de sortie d'air; et des moyens pour faire communiquer les gaines principales à air (1, 2) avec l'espace intérieur sur toute la largeur des vitres (25) à travers des fentes étroites prévues au-dessus des vitres, caractérisé en ce que les deux gaines principales à air (1, 2) sont reliées entre elles à l'arrière de l'autobus (en 3) et qu'une bouche de sortie d'air (5, 6) est prévue aux extrémités avant et arrière de chacune des gaines principales à air dans le but de désaérer l'intérieur de l'autobus et que les fentes prévues au-dessus des vitres (25) sont constituées par une fente longitudinale ininterrompue (26) d'une autre gaine (24) s'étendant en continu au-dessus des finêtres tout au long des deux parois latérales et de la paroi arrière de l'autobus et communiquant avec les deux gaines principales à air (1, 2) par des ouvertures de passage (21) et que la largeur de fente (a) ainsi que la distance entre la fente longitudinale (26) et les vitres (25) sont choisies de telle manière que l'air sortant s'écoule uniformément et lentement vers le bas contre les vitres en formant un rideau d'air.

2. Dispositif suivant la revendication 1, caractérisé en ce que cette gaine (24) munie de la fente longitudinale (26) est limitée par les vitres (25), par un profilé longitudinal du bord de la toiture (19), par un deuxième profilé (20) attaché audit profilé (19) longitudinal du bord de la toiture et par un troisième profilé (22) attaché audit deuxième profilé (20), alors que la fente longitudinale (26) est limitée entre ces vitres et un bord extérieur d'une partie horizontale dudit troisième profilé (22).

3. Dispositif suivant la revendication 1 ou 2, caractérisé en ce que la fente longitudinale (26) a une largeur de 1 − 2 mm.

4 Dispositif suivant l'une quelconque des revendications 1 à 3, caractérisé en ce que lesdites ouvertures de passage sont de petits trous (21) uniformément répartis sur la longueur d'une aile verticale du premier profilé (20).

5. Dispositif suivant l'une quelconque des revendications 1 à 4, caractérisé en ce qu'un dispositif de conditionnement d'air est prévu, dont les soufflantes sont directement reliées aux gaines principales à air (1, 2), lesdites ouvertures d'admission (4) et de sortie (5, 6) d'air étant munies d'un moyen d'obturation.

6. Dispositif suivant l'une quelconque des revendications 1 à 5, caractérisé en ce que les gaines principales à air (1, 2) sont exécutées en double, approximativement au milieu de la longueur de l'autobus et consistent en une partie supérieure et une partie inférieure, cette partie supérieure consistant en une boîte d'admission d'air (4a) qui communique avec la bouche d'admission (4) pour air frais extérieur et qui est limitée à ses deux bouts par lesdits radiateurs (16, 17) et cette partie inférieure étant en communication continue, d'une part avec l'extrémité avant et d'autre part avec l'extrémité arrière de la gaine principale à air (1, 2) correspondante.

7. Dispositif suivant l'une quelconque des revendications 1 à 6, caractérisé en ce que les bouches d'échappement d'air (5, 6) prévues à chaque extrémité des deux gaines principales (1, 2) communiquent avec une soi-disante boîte de désaération (7, 8) installée dans la gaine principale à air (1, 2) correspondante, mettant en communication l'atmosphère intérieure de l'autobus avec l'atmosphère extérieure.

8. Dispositif suivant la revendication 7, caractérisé en ce que l'ouverture (9) entre l'atmosphère intérieure de l'autobus et chacune des boîtes de désaération (7, 8) est fermée par un clapet (10).

9. Dispositif suivant la revendication 8, caractérisé en ce que ledit clapet (9) consiste d'une bande en caoutchouc ou en une autre matière légère élastique et appropriée, installée en oblique.

10. Dispositif suivant l'une quelconque des revendications 7 à 9, caractérisé en ce que chacune des boîtes de désaération (8) postérieures est équipée d'une ventilateur d'évacuation d'air (12).

11. Dispositif suivant l'une quelconque des revendications 6 à 10, caractérisé en ce que près de ladite boîte centrale (4a) servant à l'aspiration d'air extérieur, la paroi dirigée vers l'extérieur de la gaine principale (1, 2) comporte des passages mettant en communication la gaine principale à air (1, 2) en question avec l'atmosphère intérieure de l'autobus, ces passages étant orientés de telle manière que l'air qui en sort est dirigé sur les vitres latérales (25) avoisinantes.

Fig.1

Fig.2

Fig.3

Fig. 4

Fig. 5

*Fig.6*

*Fig.8*

*Fig.9*

Fig. 7

Fig. 10

Fig. 11

Fig. 12